# EUROPÄISCHE PATENTSCHRIFT

(11) **EP 3 412 893 B1**
(45) Veröffentlichungstag und Bekanntmachung des Hinweises auf die Patenterteilung: **11.03.2020**
(21) Anmeldenummer: 18172288.5
(22) Anmeldetag: 15.05.2018
(51) Int. Cl.: F02B 77/11, B60R 13/08

(54) **ISOLIERVERKLEIDUNG**
INSULATING CLADDING
REVÊTEMENT ISOLANT

(30) Priorität: 17.05.2017 DE 102017110721
(43) Veröffentlichungstag der Anmeldung: 12.12.2018
(73) Patentinhaber: BDD Beteiligungs GmbH, 68169 Mannheim (DE)
(72) Erfinder: Baum, Armin, 64668 Rimbach (DE)
(74) Vertreter: Wesch, Arno

(56) Entgegenhaltungen:
- EP-A1- 1 775 437
- EP-A1- 2 982 843
- WO-A1-2013/117808
- DE-A1-102013 107 495
- DE-U1-202014 003 108
- JP-A- 2003 090 224
- US-A- 3 077 426
- US-A1- 2009 133 958
- US-B1- 6 207 293

## Beschreibung

Die Erfindung betrifft eine Anordnung gemäß dem Oberbegriff des Patentanspruchs 1 und einen Verbindungskörper gemäß dem Oberbegriff des Patentanspruchs 8.

Eine solche Anordnung ist bereits aus der WO 2013/117 808 A1 bekannt. Bei dieser Anordnung sind Isolierverkleidungen durch Schrauben oder Bolzen miteinander verbunden, wobei zwischen den Isolierverkleidungen Verbindungskörper liegen.

Aus der US 2009/0133958 A1 ist ein Schallabsorptionselement bekannt, bei dem eine Basispaneele mittels eines verklebten Übergangsprofils mit einem Rahmensegment verbunden ist.

Isolierverkleidungen finden Verwendung, um beispielsweise Rohrleitungen, Motoren, Maschinen oder Motor- bzw. Maschinenteile so zu verkleiden, dass eine Gefährdung von Personen durch hohe Temperaturen, insbesondere in Motorräumen und Maschinenräumen, möglichst vermieden wird.

Vor diesem Hintergrund sind Standardisolierverkleidungen nach SOLAS (Internationales Übereinkommen von 1974 zum Schutz des menschlichen Lebens auf See) bekannt. Eine solche Isolierverkleidung kann mehrere Mantelkörper aufweisen. Zwischen Mantelkörpern kann eine Isolierlage aufgenommen sein,

Durch die Isolierverkleidung wird bewirkt, dass die Temperatur eines äußeren Mantelkörpers wesentlich geringer ist als die Temperatur eines inneren Mantelkörpers, der einem Maschinen- oder Motorteil zugewandt ist.

Konkret kann die Temperatur eines äußeren Mantelkörpers ca. 60 °C betragen, wobei die Temperatur des inneren Mantelkörpers ca. 100 °C oder mehr beträgt. Mantelkörper einer Isolierverkleidung werden üblicherweise durch Umbördelungen, durch das Umbiegen von Laschen oder durch Nieten und Schweißen miteinander verbunden. Hierfür ist es notwendig, die einzelnen Mantelkörper in aufwendiger Weise lagerichtig zueinander zu positionieren und dafür zu sorgen, dass isolierlagen nicht geschädigt werden.

Der Erfindung liegt daher die Aufgabe zugrunde, eine isolierverkleidung zum thermischen Isolieren von Maschinen- oder Motorteilen anzugeben, deren Mantelkörper möglichst problemlos zueinander positionierbar und verbindbar sind.

Die vorliegende Erfindung löst die genannte Aufgabe jeweils durch die Merkmale der Patentansprüche 1 und 8.

Ein Verbindungskörper zum Verbinden zweier Isolierverkleidungen umfasst einen Hüllkörper mit einer den Isolierverkleidungen zugewandten Anlagefläche , wobei die Anlagefläche zwei einander gegenüberliegende Dichtstreifen aufweist, zwischen welchen zwei in Richtung der Isolierverkleidungen auskragende Dichtflanken angeordnet sind.

Ein solcher Verbindungskörper erlaubt das Verbinden und in Reihe Schalten mehrerer Sektionen eines Isoliersystems. Die Sektionen sind als einzelne Isolierverkleidungen ausgebildet. Ein Verbindungskörper, der als Abdeckblech ausgestaltet sein kann, kann im Bereich der Hochtemperaturdämmung zu Dichtungszwecken zwischen zwei Isolierverkleidungen verwendet werden. Hierdurch werden Wärmebrücken minimiert und eine maximale Dichtheit erreicht. Des Weiteren werden eine Servicefreundlichkeit und ein einfaches stabiles System realisiert.

Vor diesem Hintergrund sind die Dichtflanken gegen die Dichtstreifen geneigt angeordnet und kragen derart von den Dichtstreifen nach innen aus, dass diese unter Bildung einer Keilform zusammenlaufen. Alternativ oder zugleich könnten die Dichtflanken zwei Seiten eines bevorzugt gleichschenkligen Dreiecks bilden, dessen Grundseite mit den Dichtstreifen fluchtet. Hierdurch ist ein dichtender Formschluss zwischen dem Verbindungskörper und den Isolierverkleidungen realisierbar, der eine hohe Stabilität und Dichtheit gewährleistet.

Die Keilform führt dazu, dass der Verbindungskörper mit den Isolierverkleidungen dichtend verpresst wird. Durch diese Konstruktion ist außerdem eine hohe Flexibilität gegeben. Eine geringere Wärmeleitung wird dadurch erzielt, dass Wärme einen längeren Weg, nämlich entlang der nach innen auskragenden Dichtflanken, zurücklegen muss.

Der Hüllkörper ist bandartig ausgebildet, wobei einem ersten Ende des Hüllkörpers ein erstes Klemm- oder Schraubmittel und einem zweiten Ende ein zweites Klemm- oder Schraubmittel zugeordnet ist, um die Enden so zu verbinden, dass der Hüllkörper die Isolierverkleidungen umfängt und gegen diese dichtend pressbar ist Hierdurch ist eine Außenklemmung, beispielweise über eine Triangel, einen Hammerkopf und/ oder einen Gegenhaken, erzielbar. Hierdurch wird eine hohe Dichtheit erzielt. Eine Wärmedehnung kann über eine flexible Klemm- und/ oder Schraubverbindung aufgenommen werden.

Eine Anordnung umfasst mindestens zwei Isolierverkleidungen der hier beschriebenen Art und mindestens einen Verbindungskörper der zuvor beschriebenen Art, wobei ein erster Dichtstreifen an einer Gegenfläche eines ersten äußeren Mantelkörpers und ein zweiter Dichtstreifen an einer Gegenfläche eines zweiten äußeren Mantelkörpers zur Abdichtung anliegt, wobei eine erste Dichtflanke an einer Neigfläche des ersten Mantelkörpers und eine zweite Dichtflanke an einer Neigfläche des zweiten Mantelkörpers zur Dichtung anliegt. Hierdurch erfolgt eine Direktisolierung oder Flanschisolierung durch den Verbindungskörper jeweils an einem äußeren Mantelkörper. Bei einer solchen Anordnung tritt keine Spaltproblematik auf, da die Dichtflanken in einen solchen Spalt keilförmig eingreifen und diesen dichtend ausfüllen.

Es entstehen auch keine Hotspots an Schraubenköpfen und kein Wärmestau im Bereich einer Rückwand hinter der Anordnung. Die Isolierverkleidungen liefern eine relativ gleichmäßige Außentemperatur- Bei der Anordnung müssen Schrauben, die die Verbindung mit einer jeweils vorherigen Sektion herstellen, nur teilweise gelöst werden. Es sind daher nur an wenigen Arbeitsstellen Montagearbeiten notwendig und deutlich weniger Schraubverbindungen zu lösen.

Es ist zunächst erkannt worden, dass eine formschlüssige Verbindung zwischen Mantelkörpern als Steckverbindung ausgestaltet sein kann- Weiter ist erkannt worden, dass durch die formschlüssige Verbindung der Mantelkörper deren Zentrierung zueinander nahezu automatisch und selbsttätig erfolgt. Es könnte ein erstes Formschlussmittel in ein zweites Formschlussmittel eingreifen, so dass ein Formschluss und eine Zentrierung automatisch erfolgen.

Es wird eine Verbindung von Blechsystemen durch formschlüssige Steckverbindungen im Bereich der Hochtemperaturdämmung ermöglicht. Hierdurch wird Material eingespart, da weniger Teile als bisher verwendet werden müssen.

Insbesondere wird die Fertigungszeit verringert, die beispielsweise ein Laser einwirken muss. Des Weiteren wird die Fertigungszeit verringert, die zum Kanten und Schweißen der Mantelkörper notwendig ist. Des Weiteren wird die Zeit zum Rüsten von Maschinen verringert. Die gesamte Fertigungszeit wird verringert.

Es wird eine Schnapp- und Rastverbindung geschaffen, durch die eine innen liegende Isolierlage nahezu nicht verletzt werden kann.

Die Schnapp- und Rastverbindung ermöglicht eine Vormontage einer Isolierverkleidung, Es ist außerdem eine hohe Montage- und Servicefreundlichkeit gegeben.

Bei minimalem Materialeinsatz und minimalen Fertigungszeiten sowie Herstellkosten wird eine hohe Effektivität erreicht. Es erfolgt eine maximale Ausschöpfung blechtechnischer Möglichkeiten bei einem bestehenden Maschinenpark. Des Weiteren ist eine hohe Servicefreundlichkeit gegeben.

Designelemente und Umformelemente können direkt in die Isolierverkleidung eingebracht werden. Auf Schweißmuttern in der Isolierverkleidung kann nahezu vollständig verzichtet werden.

Das erste Formschlussmittel könnte als in den ersten Mantelkörper eingeformte Sicke ausgebildet sein, und das zweite Formschlussmittel könnte als in den zweiten Mantelkörper eingeformte Sicke ausgebildet sein. Sicken können leicht durch Prägewerkzeuge verliersicher in einen Mantelkörper eingebracht werden. Ein Sickenwerkzeug könnte eine Gegensicke zu einer Rollsicke bereitstellen.

Bevorzugt ist ein Mantelkörper aus einem Blech, insbesondere einem Stahlblech, gefertigt. Stahlbleche lassen sich leicht umformen, prägen und/ oder tiefziehen.

Die Mantelkörper könnten zusätzlich zum Formschluss noch durch mindestens eine Schweißverbindung miteinander verbunden sein. Hierdurch wird der Formschluss stabilisiert. Ein Mantelkörper wird bevorzugt mit einem weiteren Mantelkörper durch eine Sicherheitspunktschweißung verbunden. Des Weiteren ist eine Schweißbuckelverbindung mit einer Sicherheitspunktverschweißung möglich. Es ist auch eine Sicherheitspunktschweißung an Stößen möglich, so dass ein einfaches und stabiles Kassettenprinzip realisierbar ist.

Jeder der Mantelkörper könnte zumindest eine Kammerwandung und zumindest eine relativ zu dieser geneigte oder parallele Montagewandung aufweisen, wobei das erste oder zweite Formschlussmittel in der jeweiligen Montagewandung ausgebildet ist und wobei die Montagewandungen derart zueinander orientiert sind, dass die Formschlussmittel zumindest teilweise in einander greifen. So können die Kammerwandungen einander beabstandet gegenüberliegen und Isolierlagen oder Luftpolstern Raum bieten, während die Montagewandungen im Wesentlichen unmittelbar aneinanderliegen, um den Formschluss herzustellen.

Vor diesem Hintergrund könnte eine erste Montagewandung eines ersten Mantelkörpers zu einer zweiten Montagewandung eines zweiten Montagekörpers derart geneigt oder beabstandet angeordnet sein, dass der Formschluss nur teilweise erfolgt, die Formschlussmittel sich nämlich nicht in ihrer Endposition des vollständigen Formschlusses befinden. Durch die thermische Ausdehnung eines Mantelkörpers und dessen Dehnverhalten wird der Formschluss mit steigender Temperatur immer fester und stabiler, wenn die Montagewandungen gegeneinander gepresst werden. Das Dehnverhalten wird vorteilhaft genutzt. Durch die Wärmedehnung wird der Formschluss stabilisiert.

Zwischen zwei Mantelkörpern könnte eine Be- und/ oder Entlüftungskammer oder ein Luftpolster vorgesehen sein. Ein Luftpolster senkt die an der äußeren Oberfläche mess- und fühlbare Temperatur erheblich gegenüber der am Maschinen- oder Motorteil herrschenden Temperatur ab.

Eine Isolierverkleidung kann bei einem Reihenmotor verwendet werden. Die Isolierverkleidung ist jedoch auch bei einem V-Motor verwendbar. Schließlich ist die Isolierverkleidung im Turboladerbereich einsetzbar.

Eine hier beschriebene Isolierverkleidung und die beschriebene Anordnung können verwendet werden, um Standardisolierverkleidungen nach SOLAS (Internationales Übereinkommen von 1974 zum Schutz des menschlichen Lebens auf See) zu ersetzen.

Die Isolierverkleidung und die Anordnung können auch im Verkehrsbereich von Motoren verwendet werden. Die Isolierverkleidung bzw. Teilsysteme können auch bei on-/off-Highwayanwendungen von Motoren Verwendung finden.

Die Isolierverkleidung und die Anordnung finden Verwendung, wenn eine Oberflächentemperatur im Außenbereich 60 °C nicht übersteigen soll, wobei im Inneren der Isolierverkleidung eine Temperatur von über 100 °C herrscht.

In der Zeichnung zeigen
- Fig. 1: eine schematische Schnittansicht einer Isolierverkleidung mit einem äußeren Mantelkörper, an den sich von außen nach innen eine Be- und/ oder Entlüftungskammer oder ein ruhendes Luftpolster, ein mittlerer Mantelkörper, eine Isolierlage und ein innerer Mantelkörper anschließen,
- Fig. 2: eine schematische Schnittansicht einer Isolierverkleidung, bei welcher die Sicken zweier Mantelkörper einen Formschluss eingehen,
- Fig. 3: links eine schematische Draufsicht auf eine längliche Sicke und rechts eine schematische Draufsicht auf mehrere kreisförmige Sicken,
- Fig. 4: eine schematische Ansicht einer Verbindung von Mantelkörpern aus Blech, wobei an deren Stößen eine Sicherheitspunktverschweißung vorgesehen ist,
- Fig. 5: eine schematische Ansicht einer Isolierverkleidung für eine SOLAS-Anwendung,
- Fig. 6: eine schematische Ansicht einer Isolierverkleidung für eine SOLAS-Anwendung im Verkehrsbereich,
- Fig. 7: eine schematische Ansicht einer Isolierverkleidung, bei der das Dehnverhalten eines Mantelkörpers dargestellt ist, wobei ein innerer Mantelkörper im kalten Zustand (gestrichelt) den Formschluss nicht so fest ausführt wie im erwärmten Zustand,
- Fig. 8: eine schematische Schnittansicht einer Anordnung, bei der ein Verbindungkörper zwei Isolierverkleidungen dicht miteinander verbindet, wobei der Verbindungskörper Dichtstreifen und Dichtflanken aufweist, die an Gegenflächen und Neigflächen der Isolierverkleidungen zum dichtenden Anliegen kommen, wenn eine thermische Ausdehnung erfolgt,
- Fig. 9: eine weitere schematische Schnittansicht der Anordnung gemäß Fig. 8, wobei dargestellt ist, dass ein definierter Dichtspalt zwischen den Dichtstreifen, Dichtflanken, Gegenflächen und Neigflächen aufgrund von Wärmedehnung geschlossen ist, so dass eine metallische Abdichtung bewirkt ist, und
- Fig. 10: eine schematische Ansicht einer Steckverbindung eines mittleren Mantelkörpers innerhalb einer Isolierverkleidung, wobei ein Dehnspalt vorgesehen ist, damit die Steckverbindung im erwärmten und ausgedehnten Zustand des mittleren Mantelkörpers ihre maximale Festigkeit erreichen kann.

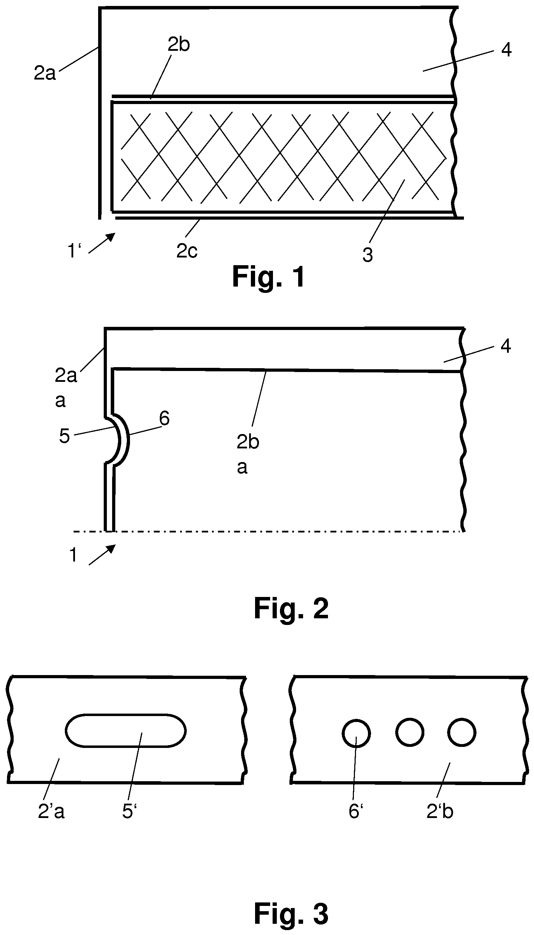

Fig. 1 zeigt eine Isolierverkleidung 1' zum thermischen Isolieren von Maschinen- oder Motorteilen, umfassend mehrere starre und metallische Mantelkörper 2a, 2b, 2c.

Des Weiteren ist eine Isolierlage 3 gezeigt, welche zwischen einem mittleren Mantelkörper 2b und einem inneren Mantelkörper 2c angeordnet ist. Eine Be- und/ oder Entlüftungskammer oder ein ruhendes Luftpolster 4 ist zwischen einem äußeren Mantelkörper 2a und dem mittleren Mantelkörper 2b ausgebildet.

Fig. 1 zeigt eine Isolierverkleidung 1', bei der das Luftpolster 4 als Be- und/ oder Entlüftungskammer ausgebildet sein kann.

Fig. 2 zeigt eine Isolierverkleidung 1 zum thermischen Isolieren von Maschinen- oder Motorteilen, umfassend mehrere, nämlich zwei, starre und metallische Mantelkörper 2a, 2b.

Die zwei Mantelkörper 2a, 2b sind durch einen Formschluss miteinander verbunden, wobei in einem ersten Mantelkörper 2a ein erstes Formschlussmittel 5 ausgebildet ist und wobei in einem zweiten Mantelkörper 2b ein zweites Formschlussmittel 6 ausgebildet ist, wobei das erste Formschlussmittel 5 und das zweite Formschlussmittel 6 mit einander zumindest bereichsweise einen reversibel lösbaren Formschluss eingehen.

Hierdurch ist eine Steckverbindung zwischen den Mantelkörpern 2a, 2b und deren Vormontage möglich.

Das erste Formschlussmittel 5 ist als in den ersten Mantelkörper 2a eingeformte Sicke ausgebildet, welche nach innen ausgewölbt ist. Das zweite Formschlussmittel 6 ist als in den zweiten Mantelkörper 2b eingeformte Sicke ausgebildet, welche ebenfalls nach innen ausgewölbt ist und in ihrer konkaven Einbuchtung die Sicke des ersten Mantelkörpers 2a aufnimmt.

Zwischen den zwei Mantelkörpern 2a, 2b ist ein Luftpolster 4 vorgesehen.

Fig. 3 zeigt schematisch verschiedene Ausgestaltungen von Sicken in einer Draufsicht. Links ist eine längliche Sicke dargestellt, rechts sind drei kreisförmige Sicken dargestellt.

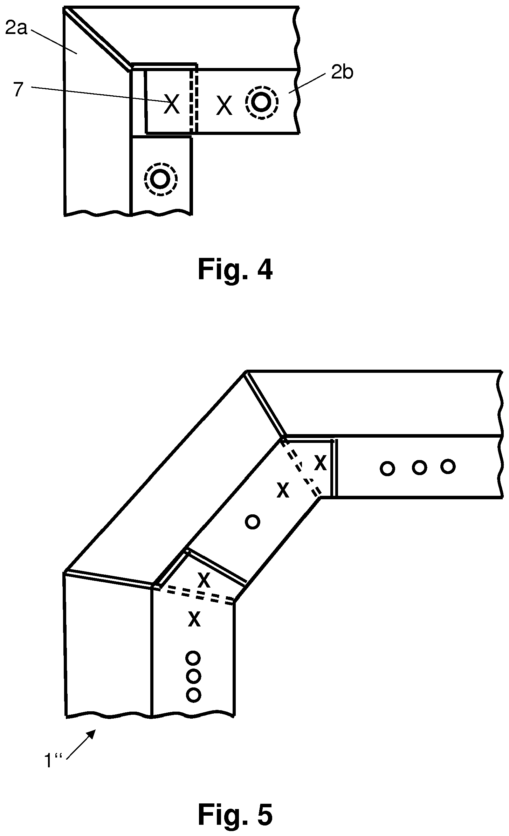

Fig. 4 zeigt schematisch, dass die Mantelkörper 2a, 2b zusätzlich zum Formschluss noch durch mindestens eine Schweißverbindung 7 miteinander verbunden sind.

Fig. 5 zeigt eine schematische Ansicht einer Isolierverkleidung 1" für eine SOLAS-Anwendung.

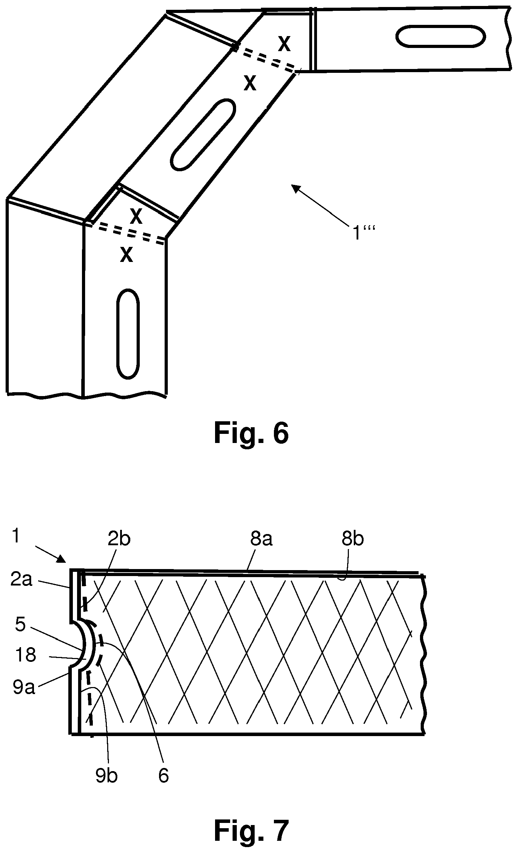

Fig. 6 zeigt eine schematische Ansicht einer Isolierverkleidung 1'" für eine SOLAS-Anwendung im Verkehrsbereich.

Fig. 7 zeigt eine schematische Ansicht einer Isolierverkleidung 1, bei der das Dehnverhalten eines zweiten Mantelkörpers 2b dargestellt ist. Der zweite Mantelkörper 2b führt im kalten Zustand den Formschluss nicht so fest aus wie im erwärmten Zustand. Dieser Zustand ist gestrichelt dargestellt. Die durchgezogene Linie zeigt den zweiten Mantelkörper 2b im erwärmten Zustand.

Jeder der Mantelkörper 2a, 2b weist zumindest eine Kammerwandung 8a, 8b und zumindest eine relativ zu dieser geneigte oder parallele Montagewandung 9a, 9b auf, wobei das erste oder zweite Formschlussmittel 5, 6 in der jeweiligen Montagewandung 9a, 9b ausgebildet ist und wobei die Montagewandungen 9a, 9b derart zueinander orientiert sind, dass die Formschlussmittel 5, 6 zumindest teilweise in einander greifen.

Fig. 7 zeigt, dass eine erste Montagewandung 9a eines ersten Mantelkörpers 2a zu einer zweiten Montagewandung 9b eines zweiten Montagekörpers 2b derart geneigt und beabstandet angeordnet ist, dass der Formschluss nur teilweise erfolgt, die Formschlussmittel 5, 6 sich nämlich nicht in ihrer Endposition des vollständigen Formschlusses befinden.

Wenn sich der zweite Formkörper 2b thermisch ausdehnt, wird der Dehnspalt 18 zwischen den Montagewandungen 9a, 9b im Wesentlichen geschlossen und der Formschluss vollendet und stabilisiert. Die nach innen geneigte Montagewandung 9b des zweiten Mantelkörpers 2b biegt sich bei Erwärmung nach außen und presst ihre Sicke formschlüssig auf die Sicke der Montagewandung 9a des ersten, äußeren Mantelkörpers 2a.

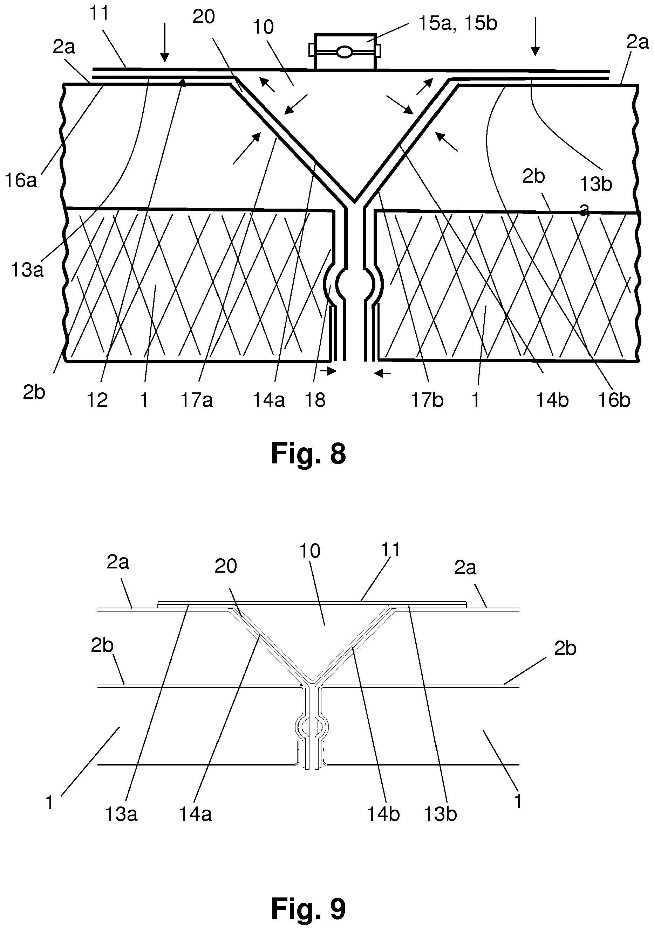

Fig. 8 zeigt einen Verbindungskörper 10 zum Verbinden zweier Isolierverkleidungen 1. Der Verbindungskörper 10 umfasst einen Hüllkörper 11 mit einer den Isolierverkleidungen 1 zugewandten Anlagefläche 12, wobei die Anlagefläche 12 zwei einander gegenüberliegende Dichtstreifen 13a, 13b aufweist, axial zwischen welchen zwei in Richtung der Isolierverkleidungen 1 auskragende Dichtflanken 14a, 14b angeordnet sind.

Die Dichtflanken 14a, 14b sind gegen die Dichtstreifen 13a, 13b geneigt angeordnet und kragen derart von den Dichtstreifen 13a, 13b weg nach innen aus, dass diese unter Bildung einer Keilform zusammenlaufen.

Die Dichtflanken 14a, 14b bilden zwei Seiten eines gleichschenkligen Dreiecks, dessen Grundseite mit den Dichtstreifen 13a, 13b im Wesentlichen fluchtet.

Der Hüllkörper 11 ist bandartig ausgebildet, wobei einem ersten Ende des Hüllkörpers ein erstes Klemm- oder Schraubmittel 15a und einem zweiten Ende ein zweites Klemm- oder Schraubmittel 15b zugeordnet ist, um die Enden so zu verbinden, dass der Hüllkörper 11 die Isolierverkleidungen 1 umfängt und gegen diese dichtend pressbar ist.

Konkret zeigt Fig. 8 eine Anordnung, umfassend mindestens zwei Isolierverkleidungen 1 und mindestens einen Verbindungskörper 10, wobei die Isolierverkleidungen 1 in Reihe geschaltet sind.

Ein erster Dichtstreifen 13a liegt an einer Gegenfläche 16a eines ersten äußeren Mantelkörpers 2a an, und ein zweiter Dichtstreifen 13b liegt an einer Gegenfläche 16b eines zweiten äußeren Mantelkörpers 2a zur Abdichtung an.

Eine erste Dichtflanke 14a liegt an einer Neigfläche 17a des ersten Mantelkörpers 2a an, und eine zweite Dichtflanke 14b liegt an einer Neigfläche 17b des zweiten äußeren Mantelkörpers 2a zur Dichtung an.

Ein hier schematisch und vergrößert dargestellter Dichtspalt 20 ist im erwärmten Zustand der Anordnung derart geschlossen und verengt, dass eine metallische Abdichtung zwischen dem Verbindungskörper 10 und den Isolierverkleidungen 1 gegeben ist.

Es erfolgt eine Verklemmung zwischen dem Verbindungskörper 10 und den Isolierverkleidungen 1, ohne eine Aussparung in einem äußeren Mantelkörper 2a vorsehen zu müssen. Die Wärmedehnung der Bauteile wird im Wesentlichen durch eine flexible Klemmverbindung aufgenommen.

Es erfolgt eine relativ geringe Wärmeleitung von innen nach außen, da die Wärme, insbesondere entlang der Dichtflanken 14a, 14b und der Neigflächen 17a, 17b, einen relativ langen Weg zurück legen muss.

Eine Isolierverkleidung einer solchen Anordnung kann beispielhaft, analog zu Fig. 1, wie folgt aufgebaut sein:
An einen ersten, äußeren Mantelkörper 2a schließt sich eine Be- und/ oder Entlüftungskammer oder ein Luftpolster 4 oder ein Luftspalt gewisser Breite an. Das Luftpolster 4 wird von einer weiter innen angeordneten Isolierlage 3, beispielsweise einer Gewebelage, durch einen zweiten, mittleren Mantelkörper 2b getrennt. Die Isolierlage 3 wiederum ist zwischen dem mittleren Mantelkörper 2b und einem inneren Mantelkörper 2c im Wesentlichen sandwichartig aufgenommen. Hierdurch wird eine maximale Effektivität bei der Schaffung einer äußeren Oberflächentemperatur erzielt.

Fig. 9 zeigt die Anordnung gemäß Fig. 8, wobei ein mittlerer Mantelkörper 2b innerhalb einer Isolierverkleidung 1 ohne Dehnspalt ausgebildet ist, da sich hier der äußere Mantelkörper 2a und der mittlere Mantelkörper 2b weitestgehend gleich ausdehnen.

Der definierte Dichtspalt 20 zwischen dem Verbindungskörper 10 und den äußeren Mantelkörpern 2a ist geschlossen, da sich der Dichtspalt 20 bei Wärmedehnung schließt, so dass eine metallische Abdichtung bewirkt ist.

Der Verbindungskörper 10 ist axial zwischen den Isolierverkleidungen 1 angeordnet. Die Spitze des Keils der Dichtflanken 14a, 14b ist nach innen gerichtet.

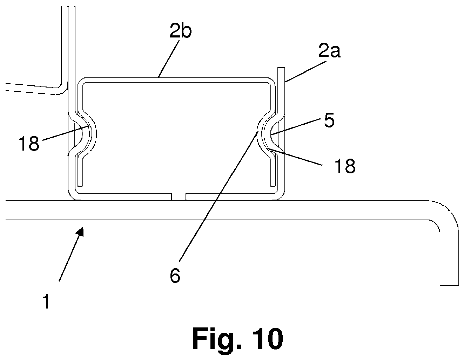

Fig. 10 zeigt eine schematische Ansicht einer Steckverbindung eines mittleren Mantelkörpers 2b innerhalb einer Isolierverkleidung 1, wobei ein Dehnspalt 18 vorgesehen ist, damit die Steckverbindung im erwärmten und ausgedehnten Zustand des inneren Mantelkörpers 2b ihre maximale Festigkeit erreichen kann.

### Bezugszeichen

- 1, 1', 1", 1'": Isolierverkleidung
- 2a: erster oder äußerer Mantelkörper
- 2b: zweiter oder mittlerer Mantelkörper
- 2c: innerer Mantelkörper
- 3: Isolierlage
- 4: Luftpolster
- 5: erstes Formschlussmittel
- 6: zweites Formschlussmittel
- 7: Schweißverbindung
- 8a, 8b: Kammerwandung von 2a bzw. 2b
- 9a, 9b: Montagewandung von 2a bzw. 2b
- 10: Verbindungskörper
- 11: Hüllkörper
- 12: Anlagefläche
- 13a, 13b: Dichtstreifen
- 14a, 14b: Dichtflanken
- 15a, 15b: Klemm- oder Schraubmittel von 10
- 16a, 16b: Gegenfläche für 13a bzw. 13b
- 17a, 17b: Neigfläche für 14a bzw. 14b
- 18: Dehnspalt
- 20: Dichtspalt

## Patentansprüche

1. Anordnung, umfassend mindestens zwei Isolierverkleidungen (1) zum thermischen Isolieren von Maschinen- oder Motorteilen und mindestens einen Verbindungskörper (10) zum Verbinden der zwei Isolierverkleidungen (1), wobei der Verbindungskörper (10) einen Hüllkörper (11) mit einer den Isolierverkleidungen (1) zugewandten Anlagefläche (12) umfasst, wobei die Anlagefläche (12) zwei einander gegenüberliegende Dichtstreifen (13a, 13b) aufweist, zwischen welchen zwei in Richtung der Isolierverkleidungen (1) auskragende Dichtflanken (14a, 14b) angeordnet sind, wobei die Dichtflanken (14a, 14b) gegen die Dichtstreifen (13a, 13b) geneigt angeordnet sind und derart von den Dichtstreifen (13a, 13b) nach innen auskragen, dass diese unter Bildung einer Keilform zusammenlaufen und/ oder dass die Dichtflanken (14a, 14b) zwei Seiten eines gleichschenkligen Dreiecks bilden, dessen Grundseite mit den Dichtstreifen (13a, 13b) fluchtet, wobei der erste Dichtstreifen (13a) an einer Gegenfläche (16a) eines ersten äußeren Mantelkörpers (2a) und der zweite Dichtstreifen (13b) an einer Gegenfläche (16b) eines zweiten äußeren Mantelkörpers (2a) zur Abdichtung anliegt, wobei die erste Dichtflanke (14a) an einer Neigfläche (17a) des ersten Mantelkörpers (2a) und die zweite Dichtflanke (14b) an einer Neigfläche (17b) des zweiten Mantelkörpers (2a) zur Dichtung anliegt,
**dadurch gekennzeichnet, dass** der Hüllkörper (11) bandartig ausgebildet ist, wobei einem ersten Ende des Hüllkörpers (11) ein erstes Klemm- oder Schraubmittel (15a) und einem zweiten Ende ein zweites Klemm- oder Schraubmittel (15b) zugeordnet ist, um die Enden so zu verbinden, dass der Hüllkörper (11) die Isolierverkleidungen (1) umfängt und gegen diese pressbar ist.

2. Anordnung nach Anspruch 1, **dadurch gekennzeichnet, dass** eine der Isolierverkleidungen (1, 1', 1", 1"') mehrere starre und/ oder metallische Mantelkörper (2a, 2b, 2c) umfasst, wobei je zwei Mantelkörper (2a, 2b) durch einen Formschluss miteinander verbunden sind, wobei in einem ersten Mantelkörper (2a) ein erstes Formschlussmittel (5) ausgebildet ist und wobei in einem zweiten Mantelkörper (2b) ein zweites Formschlussmittel (6) ausgebildet ist, wobei das erste Formschlussmittel (5) und das zweite Formschlussmittel (6) mit einander zumindest bereichsweise einen reversibel lösbaren Formschluss eingehen.

3. Anordnung nach Anspruch 2, **dadurch gekennzeichnet, dass** das erste Formschlussmittel (5) als in den ersten Mantelkörper (2a) eingeformte Sicke ausgebildet ist, und dass das zweite Formschlussmittel (6) als in den zweiten Mantelkörper (2b) eingeformte Sicke ausgebildet ist.

4. Anordnung nach Anspruch 2 oder 3, **dadurch gekennzeichnet, dass** die Mantelkörper (2a, 2b) zusätzlich zum Formschluss noch durch mindestens eine Schweißverbindung (7) miteinander verbunden sind.

5. Anordnung nach einem der Ansprüche 2 bis 4, **dadurch gekennzeichnet, dass** jeder der Mantelkörper (2a, 2b) zumindest eine Kammerwandung (8a, 8b) und zumindest eine relativ zu dieser geneigte oder parallele Montagewandung (9a, 9b) aufweist, wobei das erste oder zweite Formschlussmittel (5, 6) in der jeweiligen Montagewandung (9a, 9b) ausgebildet ist und wobei die Montagewandungen (9a, 9b) derart zueinander orientiert sind, dass die Formschlussmittel (5, 6) zumindest teilweise in einander greifen.

6. Anordnung nach Anspruch 5, **dadurch gekennzeichnet, dass** eine erste Montagewandung (9a) eines ersten Mantelkörpers (2a) zu einer zweiten Montagewandung (9b) eines zweiten Montagekörpers (2b) derart geneigt oder beabstandet angeordnet ist, dass der Formschluss nur teilweise erfolgt, die Formschlussmittel (5, 6) sich nämlich nicht in ihrer Endposition des vollständigen Formschlusses befinden,

7. Anordnung nach einem der Ansprüche 2 bis 6, **dadurch gekennzeichnet, dass** zwischen zwei Mantelkörpern (2a, 2b) eine Be- und/ oder Entlüftungskammer oder ein Luftpolster (4) vorgesehen ist.

8. Verbindungskörper (10) zum Verbinden zweier Isolierverkleidungen (1) zum thermischen Isolieren von Maschinen- oder Motorteilen, umfassend einen Hüllkörper (11) mit einer den Isolierverkleidungen (1) zugewandten Anlagefläche (12), wobei die Anlagefläche (12) zwei einander gegenüberliegende Dichtstreifen (13a, 13b) aufweist, zwischen welchen zwei in Richtung der Isolierverkleidungen (1) auskragende Dichtflanken (14a, 14b) angeordnet sind, wobei die Dichtflanken (14a, 14b) gegen die Dichtstreifen (13a, 13b) geneigt angeordnet sind und derart von den Dichtstreifen (13a, 13b) nach innen auskragen, dass diese unter Bildung einer Keilform zusammenlaufen und/ oder dass die Dichtflanken (14a, 14b) zwei Seiten eines gleichschenkligen Dreiecks bilden, dessen Grundseite mit den Dichtstreifen (13a, 13b) fluchtet, **dadurch gekennzeichnet, dass**
der Hüllkörper (11) bandartig ausgebildet ist, wobei einem ersten Ende des Hüllkörpers (11) ein erstes Klemm- oder Schraubmittel (15a) und einem zweiten Ende ein zweites Klemm- oder Schraubmittel (15b) zugeordnet ist, um die Enden so zu verbinden, dass der Hüllkörper (11) die Isolierverkleidungen (1) umfängt und gegen diese pressbar ist.

## Claims

1. Arrangement, comprising at least two insulating claddings (1) for thermal insulation of machine or engine parts and at least one connecting body (10) for connecting the two insulating claddings (1), wherein the connecting body (10) comprises an enveloping body (11) having a bearing surface (12) facing the insulating claddings (1), wherein the bearing surface (12) has two mutually opposite sealing strips (13a, 13b) between which two sealing flanks (14a, 14b) projecting in the direction of the insulating claddings (1) are arranged, wherein the sealing flanks (14a, 14b) are arranged at an inclination to the sealing strips (13a, 13b) and project inwardly from the sealing strips (13a, 13b) in such a way that they converge to form a wedge shape and/or that the sealing flanks (14a, 14b) form two sides of an isosceles triangle whose base side is aligned with the sealing strips (13a, 13b), wherein the first sealing strip (13a) bears for sealing against a counter-surface (16a) of a first outer shell body (2a), and the second sealing strip (13b) bears for sealing against a counter-surface (16b) of a second outer shell body (2a), wherein the first sealing flank (14a) bears for sealing against an inclined surface (17a) of the first shell body (2a), and the second sealing flank (14b) bears for sealing against an inclined surface (17b) of the second shell body (2a), **characterized in that** the enveloping body (11) is band-like in form, wherein a first end of the enveloping body (11) is assigned a first clamping or screwing means (15a), and a second end is assigned a second clamping or screwing means (15b), in order to connect the ends in such a way that the enveloping body (11) surrounds the insulating claddings (1) and can be pressed against them.

2. Arrangement according to Claim 1, **characterized in that** one of the insulating claddings (1, 1', 1", 111'") comprises a plurality of rigid and/or metallic shell bodies (2a, 2b, 2c), wherein in each case two shell bodies (2a, 2b) are connected to one another by a form fit, wherein a first form-fitting means (5) is formed in a first shell body (2a), and wherein a second form-fitting means (6) is formed in a second shell body (2b), wherein the first form-fitting means (5) and the second form-fitting means (6) enter into a reversibly releasable form fit with one another at least in certain regions.

3. Arrangement according to Claim 2, **characterized in that** the first form-fitting means (5) takes the form of a bead which is formed into the first shell body (2a), and **in that** the second form-fitting means (6) takes the form of a bead which is formed into the second shell body (2b) .

4. Arrangement according to Claim 2 or 3, **characterized in that**, in addition to the form fit, the shell bodies (2a, 2b) are also connected to one another by at least one welded connection (7).

5. Arrangement according to one of Claims 2 to 4, **characterized in that** each of the shell bodies (2a, 2b) has at least one chamber wall (8a, 8b) and at least one mounting wall (9a, 9b) which is inclined or parallel relative thereto, wherein the first or second form-fitting means (5, 6) is formed in the respective mounting wall (9a, 9b), and wherein the mounting walls (9a, 9b) are oriented with respect to one another in such a way that the form-fitting means (5, 6) at least partially engage in one another.

6. Arrangement according to Claim 5, **characterized in that** a first mounting wall (9a) of a first shell body (2a) is arranged at an inclination to or spaced apart from a second mounting wall (9b) of a second mounting body (2b) in such a way that the form fit occurs only partially, with the form-fitting means (5, 6) namely not being situated in their end position of the complete form fit.

7. Arrangement according to one of Claims 2 to 6, **characterized in that** an aerating and/or venting chamber or an air cushion (4) is provided between two shell bodies (2a, 2b).

8. Connecting body (10) for connecting two insulating claddings (1) for thermal insulation of machine or engine parts, comprising an enveloping body (11) having a bearing surface (12) facing the insulating claddings (1), wherein the bearing surface (12) has two mutually opposite sealing strips (13a, 13b) between which two sealing flanks (14a, 14b) projecting in the direction of the insulating claddings (1) are arranged, wherein the sealing flanks (14a, 14b) are arranged at an inclination to the sealing strips (13a, 13b) and project inwardly from the sealing strips (13a, 13b) in such a way that they converge to form a wedge shape and/or that the sealing flanks (14a, 14b) form two sides of an isosceles triangle whose base side is aligned with the sealing strips (13a, 13b), **characterized in that** the enveloping body (11) is band-like in form, wherein a first end of the enveloping body (11) is assigned a first clamping or screwing means (15a), and a second end is assigned a second clamping or screwing means (15b), in order to connect the ends in such a way that the enveloping body (11) surrounds the insulating claddings (1) and can be pressed against them.

## Revendications

1. Agencement comprenant au moins deux revêtements isolants (1) pour l'isolation thermique de pièces de machines ou de moteurs, et au moins un corps de liaison (10) pour relier les deux revêtements isolants (1), le corps de liaison (10) comprenant un corps de gainage (11) avec une surface d'appui (12) tournée vers les revêtements isolants (1), la surface d'appui (12) présentant deux bandes d'étanchéité (13a, 13b) opposées l'une à l'autre, entre lesquelles sont disposés deux flancs d'étanchéité (14a, 14b) saillant dans la direction des revêtements isolants (1), les flancs d'étanchéité (14a, 14b) étant disposés de manière inclinée par rapport aux bandes d'étanchéité (13a, 13b) et faisant saillie vers l'intérieur depuis les bandes d'étanchéité (13a, 13b) de telle sorte que ceux-ci convergent en formant une forme en coin et/ou de telle sorte que les flancs d'étanchéité (14a, 14b) forment deux côtés d'un triangle isocèle dont la base est alignée avec les bandes d'étanchéité (13a, 13b), la première bande d'étanchéité (13a) s'appliquant contre une surface conjuguée (16a) d'un premier corps d'enveloppe extérieur (2a) et la deuxième bande d'étanchéité (13b) s'appliquant contre une surface conjuguée (16b) d'un deuxième corps d'enveloppe extérieur (2a) pour réaliser l'étanchéité, le premier flanc d'étanchéité (14a) s'appliquant contre une surface inclinée (17a) du premier corps d'enveloppe (2a) et le deuxième flanc d'étanchéité (14b) s'appliquant contre une surface inclinée (17b) du deuxième corps d'enveloppe (2a) pour réaliser l'étanchéité,
**caractérisé en ce que** le corps de gainage (11) est réalisé en forme de bande, une première extrémité du corps de gainage (11) étant associée à un premier moyen de serrage ou de vissage (15a) et une deuxième extrémité étant associée à un deuxième moyen de serrage ou de vissage (15b), afin de relier les extrémités de telle sorte que le corps de gainage (11) entoure les revêtements isolants (1) et puisse être pressé contre ceux-ci.

2. Agencement selon la revendication 1, **caractérisé en ce que** l'un des revêtements isolants (1, 1', 1", 1'") comprend plusieurs corps d'enveloppe (2a, 2b, 2c) rigides et/ou métalliques, à chaque fois deux corps d'enveloppe (2a, 2b) étant connectés l'un à l'autre par engagement par correspondance de formes, un premier moyen d'engagement par correspondance de formes (5) étant réalisé dans un premier corps d'enveloppe (2a) et un deuxième moyen d'engagement par correspondance de formes (6) étant réalisé dans un deuxième corps d'enveloppe (2b), le premier moyen d'engagement par correspondance de formes (5) et le deuxième moyen d'engagement par correspondance de formes (6) réalisant l'un avec l'autre au moins en partie un engagement par correspondance de formes amovible de manière réversible.

3. Agencement selon la revendication 2, **caractérisé en ce que** le premier moyen d'engagement par correspondance de formes (5) est réalisé sous forme de moulure formée dans le premier corps d'enveloppe (2a) et **en ce que** le deuxième moyen d'engagement par correspondance de formes (6) est réalisé sous forme de moulure formée dans le deuxième corps d'enveloppe (2b).

4. Agencement selon la revendication 2 ou 3, **caractérisé en ce que** les corps d'enveloppe (2a, 2b) sont en outre connectés l'un à l'autre encore par au moins une connexion soudée (7) pour réaliser l'engagement par correspondance de formes.

5. Agencement selon l'une quelconque des revendications 2 à 4, **caractérisé en ce que** chacun des corps d'enveloppe (2a, 2b) présente au moins une paroi de chambre (8a, 8b) et au moins une paroi de montage (9a, 9b) inclinée par rapport à celle-ci ou parallèle à celle-ci, le premier ou le deuxième moyen d'engagement par correspondance de formes (5, 6) étant réalisé dans la paroi de montage respective (9a, 9b) et les parois de montage (9a, 9b) étant orientées l'une par rapport à l'autre de telle sorte que les moyens d'engagement par correspondance de formes (5, 6) s'engagent au moins en partie l'un dans l'autre.

6. Agencement selon la revendication 5, **caractérisé en ce qu'**une première paroi de montage (9a) d'un premier corps d'enveloppe (2a) est disposée de manière inclinée ou espacée par rapport à une deuxième paroi de montage (9b) d'un deuxième corps de montage (2b) de telle sorte que l'engagement par correspondance de formes ne s'effectue que partiellement, à savoir que les moyens d'engagement par correspondance de formes (5, 6) ne se trouvent pas dans leur position finale d'engagement par correspondance de formes complet.

7. Agencement selon l'une quelconque des revendications 2 à 6, **caractérisé en ce qu'**entre deux corps d'enveloppe (2a, 2b) est prévue une chambre de ventilation et/ou de désaérage ou un coussin d'air (4).

8. Corps de liaison (10) pour relier deux revêtements isolants (1) pour l'isolation thermique de pièces de machines ou de moteurs, comprenant un corps de gainage (11) avec une surface d'appui (12) tournée vers les revêtements isolants (1), la surface d'appui (12) présentant deux bandes d'étanchéité (13a, 13b) opposées l'une à l'autre, entre lesquelles sont disposés deux flancs d'étanchéité (14a, 14b) saillant dans la direction des revêtements isolants (1), les flancs d'étanchéité (14a, 14b) étant disposés de manière inclinée par rapport aux bandes d'étanchéité (13a, 13b) et faisant saillie vers l'intérieur depuis les bandes d'étanchéité (13a, 13b) de telle sorte que ceux-ci convergent en formant une forme en coin et/ou de telle sorte que les flancs d'étanchéité (14a, 14b) forment deux côtés d'un triangle isocèle dont la base est alignée avec les bandes d'étanchéité (13a, 13b),
**caractérisé en ce que**
le corps de gainage (11) est réalisé en forme de bande, une première extrémité du corps de gainage (11) étant associée à un premier moyen de serrage ou de vissage (15a) et une deuxième extrémité étant associée à un deuxième moyen de serrage ou de vissage (15b), afin de relier les extrémités de telle sorte que le corps de gainage (11) entoure les revêtements isolants (1) et puisse être pressé contre ceux-ci.
